Europäisches Patentamt

European Patent Office

Office européen des brevets

(19)

(11) Veröffentlichungsnummer: **0 382 007**

**A1**

(12) **EUROPÄISCHE PATENTANMELDUNG**

(21) Anmeldenummer: **90101444.9**

(22) Anmeldetag: **25.01.90**

(51) Int. Cl.5: **A01C 17/00**

(30) Priorität: **10.02.89 DE 3903967**

(43) Veröffentlichungstag der Anmeldung:
**16.08.90 Patentblatt 90/33**

(84) Benannte Vertragsstaaten:
**DE FR GB NL**

(71) Anmelder: **Amazonen-Werke H. Dreyer GmbH
& Co. KG
Am Amazonenwerk 9-13
D-4507 Hasbergen-Gaste(DE)**

(72) Erfinder: **Dreyer, Heinz, Dipl.Ing., Dr.
Am Amazonenwerk 7
D-4507 Hasbergen(DE)**

(54) **Landwirtschaftliche Verteilmaschine.**

(57) Landwirtschaftliche Verteilmaschine, beispielsweise Schleuderdüngerstreuer, mit einer Dosiereinrichtung, die über eine Fernbedienungsvorrichtung während der Fahrt verstellbar sowie einstellbar ist, wobei die Fernbedienungsvorrichtung eine schnelle Betätigungsstufe zum Verstellen der Dosiereinrichtung von "Nicht-Dosieren" in "Dosieren" sowie eine langsame Betätigungsstufe zum Verstellen der Dosiereinrichtung zur Änderung der Ausbringmengen besitzt. Um auf einfache Weise möglichst schnell eine genaue Einnahme des Schiebers in die gewünschte Öffnungsposition unmittelbar zu Beginn oder nach jeder Unterbrechung des Streuen sicherzustellen, ist vorgesehen, daß beim Einstellen des Ausbringmengenwertes bis in die Nähe des Sollwertes der Ausbringmenge die schnelle Betätigungsstufe eingeschaltet ist und daß dann anschließend die langsame Betätigungsstufe bis zum Erreichen des Sollwertes eingeschaltet ist.

EP 0 382 007 A1

# Landwirtschaftliche Verteilmaschine

Die Erfindung betrifft eine landwirtschaftliche Verteilmaschine gemäß Oberbegriff des Patentanspruches 1.

Eine derartige landwirtschaftliche Verteilmaschine ist bereits durch die deutsche Offenlegungsschrift 35 35 629 bekannt.

Bei dieser landwirtschaftlichen Verteilmaschine weist die Fernbedienungsvorrichtung, die als elektrischer Hubzylinder ausgebildet ist, eine schnelle und eine langsame Betätigungsstufe zum Verstellen der Dosiereinrichtung zur Änderung der Ausbringmenge auf. Die schnelle Betätigungsstufe wird zum Schließen und Öffen der Auslauföffnung eingeschaltet, während die langsame Betätigungsstufe zum Verstellen der Dosiereinrichtung zur Änderung der Ausbringmenge während der Ausbringarbeit eingeschaltet wird.

Es ist nicht ohne weiteres möglich, mit einer schnellen Betätigungsstufe aus der Schließstellung in die Öffnungsstellung zu fahren, da durch das Nachlaufmoment des Elektromotors des elektrischen Hubzylinders ein Nachlauf, der immer sehr unterschiedlich lang ist und von verschiedenen Faktoren abhängig ist, vorhanden ist.

Der Erfindung liegt die Aufgabe zugrunde, auf einfache Weise möglichst schnell eine genaue Einnahme der Öffnungsstellung des Schiebers in die gewünschte Öffnungsposition unmittelbar zu Beginn oder nach jeder Unterbrechung des Streuens sicherzustellen.

Erfindungsgemäß wird diese Aufgabe dadurch gelöst, daß beim Einstellen des Ausbringmengenwertes bis in die Nähe des Sollwertes der Ausbringmenge die schnelle Betätigungsstufe eingeschaltet ist, und daß dann anschließend die langsame Betätigungsstufe bis zum Erreichen des Sollwertes eingeschaltet wird. Infolge dieser Maßnahmen wird auf einfachste Weise sichergestellt, daß der Ausbringmengenwert praktisch schlagartig zunächst zumindest annähernd erreicht wird und daß dann bereits nach sehr kurzer Zeit automatisch über die langsame Betätigungsstufe der tatsächliche Sollwert sehr schnell erreicht wird, ohne daß zu viel Dunger ausgebracht wird.

Hierbei ist erfindungsgemäß vorgesehen, daß die Schaltung der Fernbedienungsvorrichtung derart ausgelegt ist, daß die zuletzt eingegebene Stellung der Dosiereinrichtung abgespeichert wird, wenn die Dosiereinrichtung in Stellung "Nicht-Dosieren" gebracht wird, so daß beim Wiedereinschalten der Dosiereinrichtung die Dosiereinrichtung über die schnelle Betätigungsstufe in die Nähe des abgespeicherten Wertes gebracht wird, und daß dann über die langsame Betätigungsstufe der abgespeicherte Sollwert erreicht wird. Hierdurch kann dann praktisch jeder Wert wieder sehr genau eingenommen werden.

Weitere Einzelheiten sind den übrigen Unteransprüchen, der Bespielsbeschreibung und den Zeichnungen zu entnehmen. Hierbei zeigen

Fig. 1 eine erfindungsgemäße Verteilmaschine, die als Vierscheibendüngerstreuer ausgebildet ist, in der Ansicht von hinten

Fig. 2 eine erfindungsgemäß ausgebildete Dosiereinrichtung des Düngerstreuers gemäß Fig. 1 und

Fig. 3 der elektronische Einstellkasten.

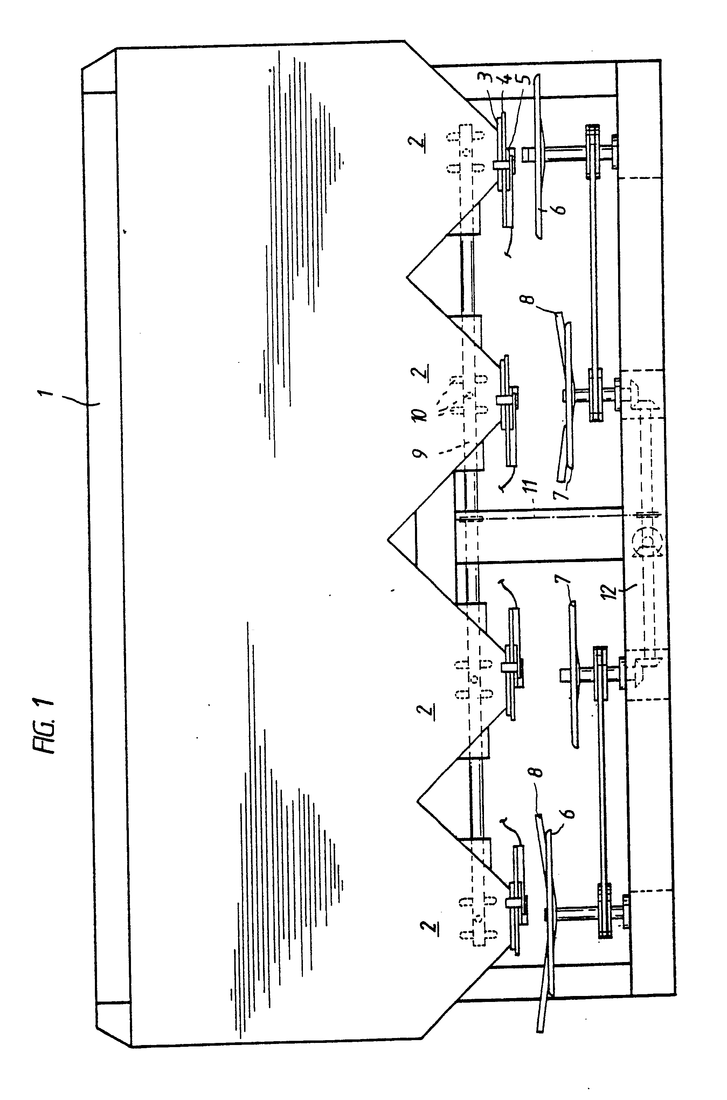

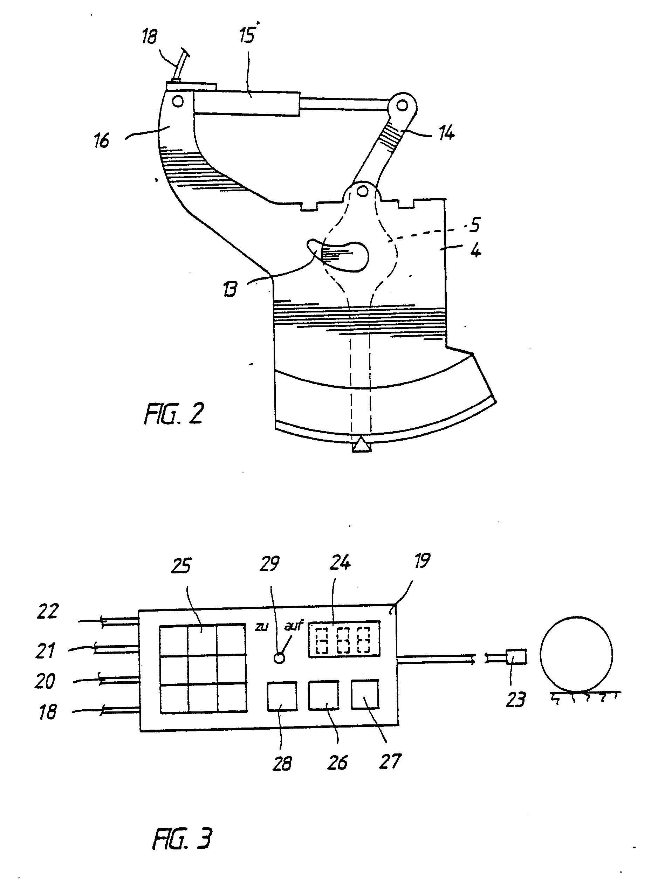

Die landwirtschaftliche Verteilmaschine gemäß Fig. 1 ist als Vierscheibendüngerstreuer ausgebildet. Der Schleuderdüngerstreuer weist den Vorratsbehälter 1 auf, der in seinem unteren Bereich durch die vier Trichterspitzen 2 unterteilt ist. Jede Trichterspitze 2 ist nach unten durch eine Dosiereinrichtung 3 verschlossen, welche als Bodenplatte 4 mit Schieber 5 ausgebildet ist. Unterhalb jeder Trichterspitze 2 bzw. jeder Dosiereinrichtung 4 ist eine Schleuderscheibe 6 bzw. 7 mit den Wurfelementen 8 angeordnet, welche den Dünger in Breitverteilung über die Bodenoberfläche verteilen. Des weiteren ist in den unteren Trichterspitzen 2 eine Rührwelle 9 mit Rührelementen 10 angeordnet. Die Rührwell 9 wird über den Kettentrieb 11 von dem Getrieb 12, welches die Schleuderscheiben 6 und 7 antreibt, angetrieben.

Die Dosiereinheit 3 besteht jeweils aus den Bodenplatten 4 und den Schiebern 5. Die links angeordneten Bodenplatten 4 mit den Schiebern 5 sind spiegelbildlich zu den Bodenplatten 4 und den Schiebern 5 auf der rechten Seite ausgebildet.

Die Bodenplatten 4 sind mittels Schnellverschlüsse an den unteren Enden der Trichterspitzen 2 angeordnet. In den Bodenplatten 5 ist jeweils eine Auslauföffnung 13 angeordnet, deren Öffnungsweite durch den Schieber 5 zu verschließen oder in ihrer Größe einstellbar ist. Der Schieber 5 weist den Hebel 14 auf, an dem der elektrische Hubzylinder 15 angeordnet ist. Auf der anderen Seite ist der Hubzylinder 15 an einem auskragenden Arm 16 der Bodenplatten 4 befestigt. Der Schieber 5 ist mit Hilfe des Bolzens 17 an der Bodenplatte befestigt und um diesen verschwenkbar. Wie bereits erwähnt, läßt sich die Auslauföffnung 13 über den Hubzylinder 15 verschließen sowie in ihrer Öffnungsweite einstellen. Der Hubzylinder 15 ist mit Hilfe des elektrischen Kabels 18 mit dem Einstellkasten 19 verbunden. Des weiteren sind die übrigen Hubzylinder der weiteren Dosiereinheiten mit den Kabeln 20,21 und 22 ebenfalls mit dem Kasten 19 verbunden. Des weiteren ist der Kasten 19 mit dem Geschwindigkeitsaufnehmer 23 verbunden.

Der Kasten 19 weist die Anzeige 24 auf, auf welcher angezeigt wird, welche Menge momentan ausgebracht wird. Des weiteren weist der Kasten 19 die Bedienungstastatur 25 auf, über welche die gewünschte Ausbringmenge pro Fläche bzw. pro zurückgelegtem Weg einzugeben ist. Des weiteren weist der Bedienungskasten 19 die Plustaste 26 und die Minustaste 27 auf, über welche jeweils in 10% Schritten die Ausbringmenge zu erhöhen oder zu erniedrigen ist. Des weiteren ist in dem Bedienungskasten die 100%-Taste 28 angeordnet, über welche wieder der eingespeicherte Sollwert bei Veränderung der Ausbringmenge über die Plus- und Minustasten 26 bzw. 27 wieder einzustellen ist. Des weiteren ist der Schalter 29 vorgesehen, über welchen zentral über die als Fernbedienungsvorrichtung ausgebildeten Hubzylinder 15 durch Stellung des Schalters 29 auf "zu" der Schieber 5 in Schließstellung zu bringen ist, sowie in der Stellung "auf" der Hubzylinder 15 betätigt wird, so daß die gewünschte Stellung des Schiebers zum Erreichen des Sollwertes eingenommen wird.

Hierbei ist die Schaltung innerhalb des Kastens 18 so ausgebildet, daß in Verbindung mit der Schaltung im Kasten 18 und im Antriebsmotor des Hubzylinders 15 eine schnelle und eine langsame Betätigungsstufe für den Hubzylinder 15 zu erreichen sind.

Die Fernbedienungsvorrichtung weist somit eine schnelle Betätigungsstufe zum Verstellen der Dosiereinrichtung, die aus der Auslauföffnung 13 in der Bodenplatte 4 und den Schieber 5 besteht zum Verstellen der Dosiereinrichtung von "Nichtdosieren" in "Dosieren" sowie eine langsame Betätigungsstufe zum Verstellen der Dosiereinrichtung zur Änderung der Ausbringmenge während des Ausbringvorganges auf. Hierbei ist die Schaltung 19 so ausgelegt, daß beim Einstellen des Ausbringmengenwertes bis in die Nähe des Sollwertes der Ausbringmenge die schnelle Betätigungsstufe eingeschaltet ist, und daß dann anschließend die langsame Betätigungsstufe bis zum Erreichen des Sollwertes eingeschaltet wird. Hierbei ist diese Schaltung so ausgelegt, daß erst in der Nähe des Sollwertes diese genaue Öffnungsstellung über die Betätigung der langsamen Betätigungsstufe durch den Schieber sehr genau erreicht wird.

## Ansprüche

1. Landwirtschaftliche Verteilmaschine, beispielsweise Schleuderdüngerstreuer, mit einer Dosiereinrichtung, die über eine Fernbedienungsvorrichtung während der Fahrt verstellbar sowie einstellbar ist, wobei die Fernbedienungsvorrichtung eine schnelle Betätigungsstufe zum Verstellen der Dosiereinrichtung von "Nicht-Dosieren" in "Dosieren" sowie eine langsame Betätigungsstufe zum Verstellen der Dosiereinrichtung zur Änderung der Ausbringmengen besitzt, dadurch gekennzeichnet, daß beim Einstellen des Ausbringmengenwertes bis in die Nähe des Sollwertes der Ausbringmenge die schnelle Betätigungsstufe eingeschaltet ist und daß dann anschließend die langsame Betätigungsstufe bis zum Erreichen des Sollwertes eingeschaltet ist.

2. Verteilmaschine nach Anspruch 1, dadurch gekennzeichnet, daß zum Verändern der Ausbringmenge die langsame Betätigungsstufe eingeschaltet ist.

3. Verteilmaschine nach Anspruch 1, dadurch gekennzeichnet, daß die Schaltung der Fernbedienungsvorrichtung (15,18) derart ausgelegt ist, daß die zuletzt eingegebene Stellung der Dosiereinrichtung abgespeichert wird, wenn die Dosiereinrichtung in Stellung "Nicht-Dosieren" gebracht wird, so daß beim Wiedereinschalten der Dosiereinrichtung die Dosiereinrichtung über schnelle Betätigungsstufen in der Nähe des abgespeicherten Wertes gebracht wird, und daß dann über die langsame Betätigungsstufe der abgespeicherte Sollwert erreicht wird.

4. Verteilmaschine nach Anspruch 1, der als Schleuderstreuer, vorzugsweise Anbauschleuderstreuer ausgebildet ist, insbesondere für gekörnte Düngemittel, mit einem Vorratsbehälter und einer Verteileinrichtung mit insbesondere zumindest zwei angetrieben Verteilorganen, denen die auszubringenden Materialien über zumindest eine mit zumindest einer Schieberanordnung verschließbare und auf verschiedene Öffnungsweiten einstellbare Auslauföffnung zuführbar sind, wobei die jeweilige Schieberanordnung mit Hilfe einer Fernbedienungsvorrichtung während der Fahrt in Öffnungsstellungen einstellbar sowie verstellbar ist, wobei die Fernbedienungsvorrichtung eine schnelle Betätigungsstufe zum Verstellen der Schieberanordnung in die Schließ- und in die Öffnungsstellung sowie eine langsame Betätigungsstufen zum Verstellen der Schieberanordnung in die Öffnungsstellung, sowie in die zusätzlichen Öffnungsstellungen besitzt, dadurch gekennzeichnet, daß die Fernbedienungsvorrichtung derart ausgelegt ist, daß beim Einstellen des Öffnungswertes bis in die Nähe des gewünschten Sollwertes der Öffnungsstellung die schnelle Betätigungsstufe eingeschaltet ist und daß dann in der Nähe des Sollwertes der Öffnungsstellung diese genaue Öffnungsstellung über die Betätigung der langsamen Betätigungsstufe durch die Schieber eingenommen wird.

5. Schleuderstreuer nach einem oder mehreren der vorstehenden Ansprüche, dadurch gekennzeichnet, daß die Fernbedienungsvorrichtung als elektrischer Hubzylinder oder als Elektromotor ausgebildet ist, daß das Fernbedienungselement mit einer elektrischen oder elektronischen Schaltung verbunden ist, über welche der Schieber in die gewünschte Öffnungsstellung bringbar ist.

6. Schleuderstreuer nach einem oder mehreren der vorstehenden Ansprüche, dadurch gekennzeichnet, daß die Schaltung derart ausgelegt ist, daß die zuletzt eingenommene Schieberstellung abgespeichert wird, wenn der Schieber in die Schließstellung über die schnelle Betätigungsstufe gebracht wird, so daß beim Öffnen des Schiebers zunächst über die schnelle Öffnungsstellung der Schieber in die Nähe des zuletzt eingestellten Wertes gebracht wird und daß dann mit Hilfe der langsamen Betätigungsstufe der Schieber in die exakte Öffnungsstellung gebracht wird.

FIG. 1

FIG. 2

FIG. 3

# Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-192089 (AMAZONEN-WERKE) <br> * Seite 12, Zeile 7 - Seite 13, Zeile 24; Figuren 1-6 * | 1 | A01C17/00 |
| A | | 3, 4, 5, 6 | |
| | --- | | |
| Y | DE-A-3641080 (AMAZONEN-WERKE) <br> * Spalte 3, Zeile 37 - Spalte 5; Figuren 1-5 * | 1 | |
| A | | 3, 4, 5, 6 | |
| | --- | | |
| D,A | EP-A-191374 (AMAZONEN-WERKE) <br> * Seite 13, Zeile 21 - Seite 39, Zeile 19; Figuren 1-19 * | 1-6 | |
| | ----- | | |

| | |
|---|---|
| | RECHERCHIERTE SACHGEBIETE (Int. Cl.5) |
| | A01C |

Der vorliegende Recherchenbericht wurde für alle Patentansprüche erstellt

| Recherchenort | Abschlußdatum der Recherche | Prüfer |
|---|---|---|
| DEN HAAG | 09 MAI 1990 | VERMANDER R.H. |